# EUROPEAN PATENT SPECIFICATION

(11) **EP 2 053 186 B1**
(45) Date of publication and mention of the grant of the patent: **21.07.2010**
(21) Application number: 07122886.0
(22) Date of filing: 11.12.2007
(51) Int. Cl.: E05B 65/12, E05B 65/20

(54) **Device for preventing unlocking of door handle**
Vorrichtung zum Verhindern der Entriegelung einer Türklinke
Dispositif de prévention de déverrouillage de poignée de porte

(30) Priority: 22.10.2007 KR 20070106265
(43) Date of publication of application: 29.04.2009
(73) Proprietor: HYUNDAI MOTOR COMPANY, Seoul (KR)
(72) Inventor: Lee, Jeongmin, Haeundae-gu 612-777, Busan (KR)
(74) Representative: Viering, Jentschura & Partner

(56) References cited:
- EP-A- 1 050 644
- EP-A- 1 548 214
- KR-A- 20020 030 001
- US-A1- 2007 080 547

## Description

### CROSS-REFERENCE TO RELATED APPLICATIONS

The present application is based on, and claims priority from, Korean Application Serial Number 10-2007-0106265, filed on October 22, 2007, the disclosure of which is hereby incorporated by reference herein in its entirety.

### FIELD OF THE INVENTION

The present invention relates to prevent unlocking of a door handle, particularly a device for preventing unlocking of a door handle that prevents undesired unlocking of a door ratchet by normal and inverse inertia forces generated in a side collision.

### BACKGROUND OF THE INVENTION

In general, a vehicle is equipped with doors for passengers to get on/off and a lock is provided in the doors. In particular, a handle is provided to the outside of the doors for opening/closing. The handle is equipped with a mechanism to prevent undesired unlocking of door ratchet by a normal inertia force toward the inside of the vehicle and an inverse inertia force toward the inside of the vehicle in a side collision. See for example document EP-A-1 050 644

For this reason, in the related art, artificial unlocking of a door ratchet by a normal inertia force toward the outside of a vehicle in a side collision is prevented by providing a predetermined weight body to the portion that is involved in unlocking the door ratchet by the handle.

However, the weight provided to achieve the operation has a limit that it can only to prevent artificial unlocking of the door ratchet only against an inertia force applied in one direction in a side collision.

In particular, both of a normal inertia force toward the outside of a vehicle and an inverse inertia force toward the inside of the vehicle are sequentially exerted in a door in a side collision. Therefore, when the weight of a weight body against the normal inertia force toward the outside of the vehicle is large, it is possible to more securely prevent unlocking of a door ratchet by the normal inertia force, but it causes a problem that the door ratchet is more easily unlocked by the inverse inertia force toward the inside of the vehicle.

Therefore, not only it is difficult to determined an appropriate weight of the weight body that prevents undesired unlocking of the door ratchet due to inertia forces applied toward the inside and outside of the vehicle in a side collision, but it is difficult to meet related laws and regulations that prevents undesired opening of the door in a side collision in designing.

In general, a handle for opening/closing is provided at doors of a vehicle and the handle has a configuration that prevents undesired unlocking of a door ratchet due to a normal inertia force generated in a side collision.

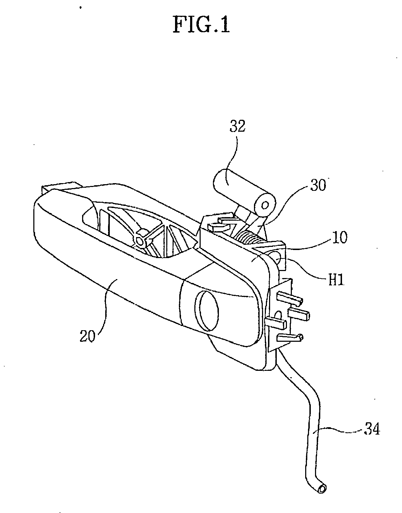

That is, as shown in FIG. 1, a base body 10 is disposed to the outside of a door, a handle 20 is disposed such that it can be pulled from base body 10, and a pivot arm 30 is disposed to the rear side of handle 20 such that it can pivot through a connecting arm 22.

The middle portion of pivot arm 30 is hinged to base body 10 by a hinge H1, an end is in contact to connecting arm 22, and the other end is provided with a balance weight 32 having a predetermined weight and connected with a release rod 34 that is connected with a door ratchet.

In the above configuration, pivot arm 30 is connected to base body 10 through a return spring to apply a return force to the pivot arm in opposite direction to the unlocking direction of the door ratchet.

Therefore, a normal inertia force is applied in a side collision, pivot arm 30 can pivot in order not to unlock the door ratchet, by an inertia force exerted by balance weight 32.

That is, when a normal inertia force is applied in a side collision, pivot arm 30 prevents unlocking of the door ratchet by pivoting in the pulling direction of release rod 34 by movement of balance weight 32.

However, in a side collision, a normal inertia force and an inverse inertia force are alternately applied to pivot arm 30; however, when an inverse inertia force is applied, pivot arm 30 pushes release rod 34 and the door ratchet is unlocked. Accordingly, the door is unexpectedly opened, which causes danger of a secondary accident.

That is, it is advantageous to increase the weight of balance weight 32 to prevent undesired unlocking of the door ratchet using a normal inertia force in a side collision, which, however, allows the door ratchet to be more easily unlocked by an inverse inertia force.

Therefore, it is difficult to determine appropriate weight of balance weight 32 to prevent the door from opening unexpectedly by an inertia force in a side collision; therefore, it is very hard to meet related laws and regulations in designing the door that is not unexpectedly opened in a side collision.

### SUMMARY OF THE INVENTION

It is an object of the invention to remove danger of a second accident due to opening of a door and meet related laws and regulations by preventing undesired unlocking of a door ratchet by normal and inverse inertia forces that are exerted in the door in a side collision.

Embodiments of the present invention provide a device for preventing unlocking of a door handle including a handle, a pivot arm, a release rod, a locking member, and a through hole. The handle is disposed such that it can be pulled from a base body and has a connecting arm at the rear side. The pivot arm is hinged to the base body and has an end that is locked to a protrusion of the connecting arm and the other end with a balance weight. The release rod is connect to the other end of the pivot arm and unlocks a door ratchet. The locking member is hinged to the connecting arm and receives a pivot force such that it contacts to an end of the pivot arm. The through hole is formed through the base body to receive a free end of the locking member and restrict movement of the handle with respect to the base body.

According to a device for preventing unlocking of a door handle of an embodiment of the invention, it is possible to prevent undesired unlocking of a door ratchet by restricting movement of a door handle due to inertia forces using a balance weight, when a normal and inverse inertia forces in a side collision. '

Further, it is possible to correspond to related laws and regulations by preventing undesired locking of the door ratchet in a side collision and more positively prevent a secondary accident caused by undesired opening of the door.

### BRIEF DESCRIPTION OF THE DRAWINGS

For better understanding of the nature and objects of the present invention, reference should be made to the following detailed description with the accompanying drawings, in which:
FIG. 1 is a view showing the configuration of a device for preventing unlocking of a door handle according to an embodiment of the invention;

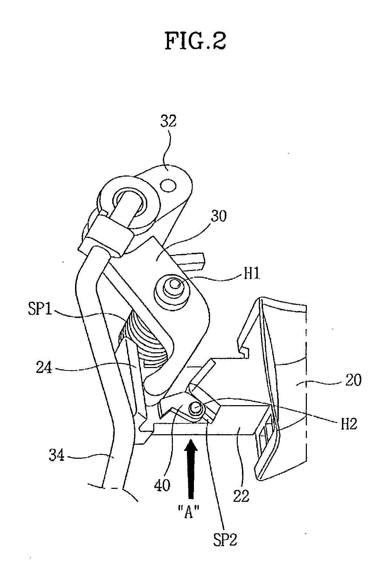

FIG. 2 is a view showing the inside configuration of the device for preventing unlocking of a door handle according to an embodiment of the invention;

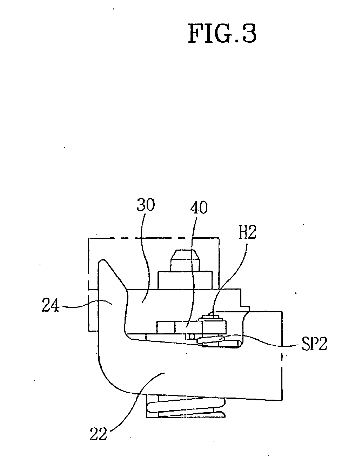

FIG. 3 is a view seen in the direction of "A" of FIG. 2;
FIG. 4 shows a partial view of a locking member inserted in a through hole of a base body, shown in FIG. 2, and a bottom view thereof;
FIG. 5 is a view illustrating an operation that prevents unlocking of a door ratchet when a normal inertia force is generated by side collision;
FIG. 6 is a view illustrating an operation that prevents unlocking of a door ratchet when an inverse inertia force is generated by side collision; and
FIG. 7 is a view illustrating relationship of motions of a locking member and a pivot arm shown in FIG. 6.

### DETAILED DESCRIPTION OF THE PREFERRED EMBODIMENTS

Hereinafter, an embodiment of the invention is described in detail with the accompanying drawings.

As shown in the drawings, a device for preventing unlocking of a door handle according to an embodiment of the invention includes a base body 10, a handle 20, a pivot arm 30, and a locking member 40.

Base body 10 is disposed to the outside of a door, handle 20 with a connecting arm 22 connected to the rear side can be pulled from base body 10 when the door opens and constitutes a grip-typed outer handle of the door together with base body 10.

Pivot arm 30 is pivotably mounted to base body 10 at the middle portion by a hinge H1. Pivot arm 30 is disposed such that an end is locked to connecting arm 22 of handle 20, and a balance weight 32 having a predetermined weight is provided to the other end. Further, a release rod 34 that unlocks a door ratchet (not shown) by pulling handle 20 is connected to the other end of pivot arm 30.

Locking member 40 is hinged to connecting arm 22 is locked to base body 10 by an end of connecting arm 30 that is pushed. In detail, a free end of locking member 40 can pivot up/down by a hinge H2 at a side of connecting arm 22. Therefore, when an inverse inertia force is applied in a side collision, the end of locking member 40 is pushed by an end of pivot arm 30 and pivots about hinge H2 to be locked to base body 10, thereby restricting movement of handle 20 with respect to base body 10.

In order to achieve the above operation, a through hole 12 that restricts the movement of handle 20 with respect to base body 10 by receiving the free end of locking member 40 is formed through base body 10. In this embodiment, through hole 12 is positioned on the downward pivot path of locking member 40 to receive the free end of locking member 40.

Further, a return spring SP1 that provides a return force to pivot arm 30 is provided to hinge H1 and the return force provided to pivot arm 30 by return spring SP1 is applied in the opposite direction to unlocking direction of the door ratchet of release rod 34.

Further, a protrusion 24 that contacts with an end of pivot arm 30 is formed at connecting arm 22. When handle 20 is pulled from base body 10 to open the door, protrusion24 of connecting arm 22 pivots the end of connecting arm 30 and release rod 34 connected to the other end of pivot arm 30 is pushed downward, such that the door ratchet is unlocked.

In addition, a return spring SP2 that provides a return force to contact the free end of locking member 40 to an end of pivot arm 30 is provided to hinge H2. Therefore, locking member 40 is pivoted about hinge H2 by the return force of return spring SP2 such that it always contacts to the free end of locking member 40.

Therefore, as handle 20 is pulled from base body 10 to open the door, an end of pivot arm 30 is pulled by protrusion 24 of connecting arm 22 and the other end of pivot arm 30 pushes release rod 34 downward while pivoting about hinge H1, such that the door ratchet is unlocked.

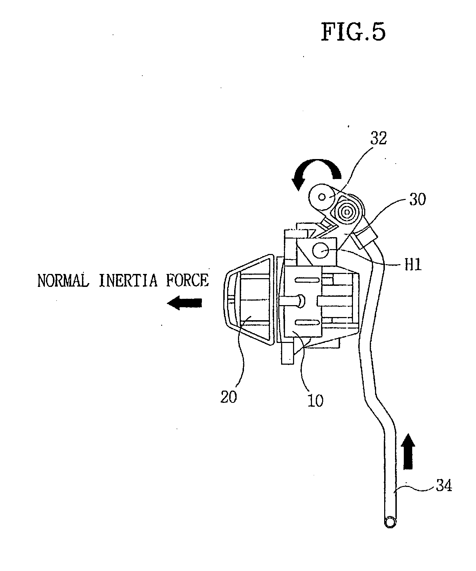

Further, when a normal inertia force toward the outside of a vehicle is generated in a side collision, as shown in FIG. 5, pivot arm 30 pivots about hinge H1 such that release rod 34 is pulled by weight of balance weight 32; therefore, the door ratchet is not unexpectedly unlocked.

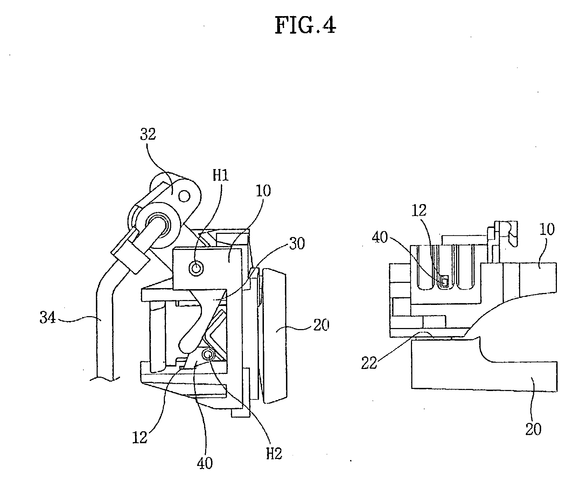

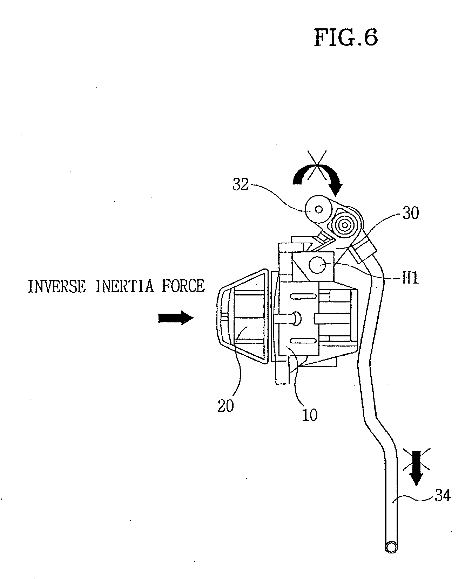

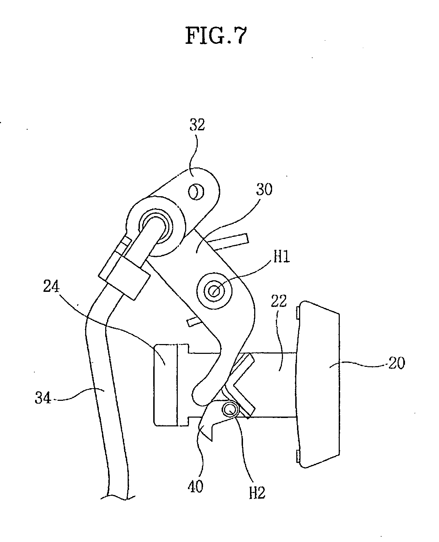

On the other hand, when an inverse inertia force toward the inside of a vehicle is generated in a side collision, as shown in FIGS. 6 and 7, pivot arm 30 pivots about hinge H1 such that release rod 34 is pushed, in which locking member 40 is pushed by pivot arm 30 and pivots about hinge H2 to be inserted into through hole 12 of base body 10 (shown in FIG. 4), such that the movement of handle 20 with respect to base body 10 is restricted.

As a result, even though pivot arm 30 pivots, handle 20 cannot moved by restriction of locking member 40; therefore, the door ratchet is not unexpectedly unlocked.

## Claims

1. A device for preventing unlocking of a door handle comprising:
a base body (10) that is disposed to the outside of a door;
a handle (20) that is movable in a pulling direction from the base body;
a pivot arm (30) that is hinged to the base body (10) and unlocks a door ratchet when the handle is actuated to open the door;
a balance weight (32) that is provided to the pivot arm (30) and prevents unlocking of the door ratchet when an inertia force is applied toward the inside of a vehicle; and
a locking member (40) that is hinged to the handle (20) and prevents unlocking of the door ratchet by restricting movement of the handle (20) with respect to the base body (10) when an inertia force is applied toward the outside of a vehicle.

2. The device as defined in claim 1, wherein the locking member (40) is locked to the base body (10) by the pivot arm (30) pivoting when an inertia force is applied toward the inside of a vehicle.

3. The device as defined in claim 2, wherein a through hole (12) that locks a free end of the locking member is formed through the base body (10).

4. The device as defined in claim 3, wherein a connecting arm (22) with a protrusion (24) that pulls the pivot arm (30) when the door is opened is provided to the rear side of the handle,
the locking member (40) is disposed pivotably up/down with respect to the connecting arm (22).

5. The device as defined in claim 4, wherein the through hole (12) is positioned on a downward pivot path of the locking member (40) to receive the free end of the locking member.

6. The device as defined in claim 1, wherein a return spring (SP2) that provides a return force for contacting the free end of the locking member to an end of the pivot arm is provided to the hinge of the locking member.

## Patentansprüche

1. Vorrichtung zum Verhindern einer Entriegelung eines Türgriffs, aufweisend:
einen Grundkörper (10), der sich an der Außenseite einer Tür befindet,
einen Griff (20), der in einer Zugrichtung von dem Grundkörper weg bewegbar ist,
einen Schwenkarm (30), der mit dem Grundkörper (10) gelenkig verbunden ist und der eine Türsperrklinke entriegelt, wenn der Griff zum Öffnen der Tür betätigt wird,
ein Ausgleichsgewicht (32), das an dem Schwenkarm (30) vorgesehen ist und das eine Entriegelung der Türsperrklinke verhindert, wenn eine Trägheitskraft zu der Innenseite eines Fahrzeugs hin aufgebracht wird, und
ein Sperrelement (40), das gelenkig mit dem Griff (20) verbunden ist und das eine Entriegelung der Türsperrklinke durch ein Einschränken der Bewegung des Griffs (20) bezogen auf den Grundkörper (10) verhindert, wenn eine Trägheitskraft zu der Außenseite eines Fahrzeugs hin aufgebracht wird.

2. Vorrichtung gemäß Anspruch 1, wobei das Sperrelement (40) an den Grundkörper (10) mittels des Schwenkarms (30) gesperrt ist, der geschwenkt wird, wenn eine Trägheitskraft zu der Innenseite eines Fahrzeugs hin aufgebracht wird.

3. Vorrichtung gemäß Anspruch 2, wobei ein Durchgangsloch (12), das ein freies Ende des Sperrelements sperrt, durch den Grundkörper (10) hindurch ausgebildet ist.

4. Vorrichtung gemäß Anspruch 3, wobei ein Verbindungsarm (22) mit einem Vorsprung (24), der den Schwenkarm (30) zieht, wenn die Tür geöffnet wird, an der Rückseite des Griffs vorgesehen ist,
wobei das Sperrelement (40) bezogen auf den Verbindungsarm (22) nach oben/unten schwenkbar eingerichtet ist.

5. Vorrichtung gemäß Anspruch 4, wobei das Durchgangsloch (12) auf einem Nach-unten-Schwenkweg des Sperrelements (40) zum Aufnehmen des freien Endes des Sperrelements positioniert ist.

6. Vorrichtung gemäß Anspruch 1, wobei eine Rückstellfeder (SP2), die eine Rückstellkraft zum In-Berührung-Bringen des freien Endes des Sperrelements mit einem Ende des Schwenkarms bereitstellt, an dem Gelenk des Sperrelements vorgesehen ist.

## Revendications

1. Dispositif pour empêcher le déverrouillage d'une poignée de porte, comprenant :
un corps de base (10) qui est disposé à l'extérieur d'une porte ;
une poignée (20) qui est mobile dans une direction de traction à partir du corps de base ;
un bras de pivot (30) qui est articulé par rapport au corps de base (10) et déverrouille un cliquet de porte lorsque la poignée est actionnée pour ouvrir la porte ;
un poids d'équilibrage (32) qui est prévu sur le bras de pivot (30) et empêche le déverrouillage du cliquet de porte lorsqu'une force d'inertie est appliquée vers l'intérieur d'un véhicule ; et
un élément de blocage (40) qui est articulé par rapport à la poignée (20) et empêche le déverrouillage du cliquet de la porte en limitant le mouvement de la poignée (20) par rapport au corps de base (10) lorsqu'une force d'inertie est appliquée vers l'extérieur d'un véhicule.

2. Dispositif selon la revendication 1, dans lequel l'élément de blocage (40) est bloqué sur le corps de base (10) par le bras de pivot (30) pivotant lorsqu'une force d'inertie est appliquée vers l'intérieur d'un véhicule.

3. Dispositif selon la revendication 2, dans lequel un trou de passage (12) qui bloque une extrémité libre de l'élément de blocage est formé à travers le corps de base (10).

4. Dispositif selon la revendication 3, dans lequel un bras de raccordement (22) avec une saillie (24) qui tire le bras de pivot (30) lorsque la porte est ouverte, est prévu sur le côté arrière de la poignée,
l'élément de blocage (40) est disposé de manière pivotante vers le haut / vers le bas par rapport au bras de raccordement (22).

5. Dispositif selon la revendication 4, dans lequel le trou de passage (12) est positionné sur une trajectoire de pivot descendante de l'élément de blocage (40) afin de recevoir l'extrémité libre de l'élément de blocage.

6. Dispositif selon la revendication 1, dans lequel un ressort de rappel (SP2) qui fournit une force de rappel pour mettre en contact l'extrémité libre de l'élément de blocage avec une extrémité du bras de pivot est prévu sur la charnière de l'élément de blocage.
